# EUROPEAN PATENT SPECIFICATION

(11) **EP 4 484 193 B1**
(45) Date of publication and mention of the grant of the patent: **29.07.2026**
(21) Application number: 24184933.0
(22) Date of filing: 27.06.2024
(51) Int. Cl.: B60K 1/04

(54) **VEHICLE AND POWER BATTERY PACK THEREOF**
FAHRZEUG UND BATTERIEPACK DAFÜR
VÉHICULE ET BLOC-BATTERIE D'ALIMENTATION ASSOCIÉ

(30) Priority: 30.06.2023 CN 202321705103 U; 30.06.2023 CN 202321709584 U; 30.06.2023 CN 202310803084
(43) Date of publication of application: 01.01.2025
(73) Proprietor: Segway Technology Co., Ltd., Jiangsu 213000 (CN)
(72) Inventor: MA, Wei, Changzhou, 213000 (CN); GUO, Rui, Changzhou, 213000 (CN); CHEN, Liang, Changzhou, 213000 (CN)
(74) Representative: J A Kemp LLP

(56) References cited:
- EP-B1- 2 996 893
- DE-A1- 102019 203 045
- DE-A1- 102021 213 227
- US-A1- 2021 359 374
- US-B1- 9 499 205
- US-B2- 10 629 883
- US-B2- 9 321 338

## Description

### TECHNICAL FIELD

The present invention relates to the technical field of vehicles, in particular to a vehicle and a power battery pack thereof.

### BACKGROUND

At present, an engine is generally used as a power source in all-terrain vehicles. With the development of new energy, new energy technologies are gradually applied to the field of all-terrain vehicles, so how to implant power battery packs into the all-terrain vehicles has become a hot spot in current research.

The power battery pack is used to provide power to a drive system of the all-terrain vehicle, so the design and layout of the power battery pack are very important, which not only needs to consider the layout, structural design, electrical layout, sealing scheme and others of all components in the power battery pack, but also needs to consider the layout of the power battery pack on the whole vehicle, the safety protection of the power battery pack, etc.

Therefore, the structural design of the current power battery pack is unreasonable, such that the layout of the whole vehicle cannot be optimized when the power battery pack is installed on a frame.

DE102021213227A1 discloses a vehicle according to the preamble of claim 1 with vehicle battery unit that includes: a lower case having a pair of battery receiving portions arranged on two lateral sides of a vehicle and a connecting portion arranged between the pair of battery receiving portions and curved to face convexly upward; battery modules respectively installed in the pair of battery receiving portions, cooling blocks arranged below the battery modules and receiving and discharging cooling water to cool the battery modules, at least one cooling water hose configured to exchange cooling water with the cooling blocks, and an upper case arranged on the lower case and having a cooling water hose coupler unit configured to connect the cooling water hose to the cooling blocks.

EP2996893B1 relates to a device for retaining at least one energy module for a motor vehicle, in particular for retaining at least one high-voltage energy module for a hybrid or electric vehicle, wherein the device has a retaining element which can be fitted on the vehicle body via one or more fitting portions and is intended for retaining the at least one energy module, wherein the retaining element has at least one retaining portion, for retaining the at least one energy module, and at least one deformation portion. The invention provides for the deformation portion to be configured such that, when a predetermined force is applied to the retaining element, the deformation portion, while being deformed, allows predetermined relative movement, resulting from the deformation, between the retaining portion, which retains the at least one energy module, and the one or more fitting portions of the retaining element, The invention also relates to a vehicle having such a device, and to a corresponding installation method.

US9321338B2 discloses a battery pack held under a floor panel by a battery pan attached under the floor panel of a vehicle body at a position inside an over-floor framework formed over the floor panel by a pair of seat rails, a front upper seat cross member, and a right upper seat cross member.

US9499205B1 discloses a vehicle that includes a fuel tank, a battery, a first exoskeleton, and a second exoskeleton. The fuel tank and the battery straddle a driveline and are each disposed below a seating area. The first exoskeleton has a first pair of rails secured to each other by a first cross member. The second exoskeleton has a second pair of rails secured to each other by a second cross member. The first and second exoskeletons surround the fuel tank and battery, respectively, and are configured to absorb energy during an impact to protect the fuel tank and battery.

US10629883B2 is directed to a contact plate configured to establish electrical bonds between battery cells in a battery module. In a first embodiment, the contact plate includes at least one primary conductive layer, wherein the contact plate is configured to exchange current with at least one group of battery cells in the battery module, and wherein a thickness of the at least one primary conductive layer scales with a current expectation at different portions of the contact plate. In a second embodiment, the contact plate includes at least one primary conductive layer, and a set of bonding connectors that is configured to provide direct electrical bonds between the contact plate and terminals of at least one group of battery cells, wherein the set of bonding connectors is pre-assembled with the contact plate before the contact plate is installed into the battery module.

DE102019203045A1 relates to a battery arrangement for fastening a vehicle battery beneath a seat surface of a vehicle seat and above a vehicle floor of a hybrid motor vehicle, in particular a partially electrified hybrid motor vehicle, wherein the battery arrangement has a vehicle battery and a battery cage at least partially surrounding the vehicle battery, and wherein the vehicle battery is fastened to the vehicle seat by means of a guide arrangement so as to be slidably movable along a transverse direction of the vehicle relative to the battery cage and/or to the vehicle seat.

US2021359374A1 discloses a battery system that includes: battery cells; and a battery housing including: a chamber between a bottom cover and a top cover of the battery housing; and at least one sidewall member connecting the bottom cover and the top cover to each other, the at least one sidewall member extending along an outer boundary of the chamber, and including: a channel inside the sidewall member, and apertures connecting the chamber with the channel, the apertures being located at atop half of the channel such that at least a bottom half of the channel is for collecting solid matter. The battery system vents a venting gas of a thermal runaway from at least one of the battery cells by directing the venting gas along at least one venting path leading from the chamber, through at least one of the apertures and the channel, and to an environment of the battery system.

### SUMMARY

In view of the above problems, embodiments of the present invention provide a vehicle and a power battery pack thereof. The power battery pack can be installed to the frame in a reasonable manner, thereby optimizing the layout of the whole vehicle. The present invention is set out in the appended set of claims.

In order to fulfill the above object, the embodiments of the present invention provide the following technical solutions.

An embodiment of the present invention provides a vehicle including a frame, a first seat, a second seat, a power battery pack and a transmission shaft; where the first seat and the second seat are arranged at intervals in a second direction; in a third direction, part of the power battery pack is located in a space between the first seat and the frame, and rest of the power battery pack is located in a space between the second seat and the frame; and an avoidance portion that is recessed upward in the third direction is arranged at a bottom of the power battery pack, and the avoidance portion extends to a front side and a rear side of the power battery pack in a first direction; the avoidance portion is arranged to cooperate with the transmission shaft; and the transmission shaft penetrates through the avoidance portion and extends in the first direction.

In a possible implementation, the vehicle further includes a fuel tank assembly, a drive motor, an engine, a motor thermal management system and an engine thermal management system; where the power battery pack is used for providing power to the drive motor, and the engine and the drive motor are connected to the transmission shaft through a switching structure; and a first pipeline of the engine thermal management system and a second pipeline of the motor thermal management system are arranged to respectively cooperate with the avoidance portion, so that the first pipeline and the second pipeline extend in the avoidance portion.

In a possible implementation, the frame includes a first space and a second space, and the engine and the fuel tank assembly are arranged in the second space; and in the first direction, the fuel tank assembly is located at a rear of the first seat or a rear of the second seat.

In a possible implementation, the frame further includes side girders, protective frames and side protective beams; in the second direction, a protective frame is located on an outer side of a corresponding side girder; in the third direction, the side protective beam is located above the corresponding side girder; the side girders, the protective frames and the side protective beams form a protective space for the power battery pack; in the second direction, the protective frame and the corresponding side protective beam are arranged on each side of the frame, respectively; and the side protective beam is configured so that when the power battery pack is installed on the frame, part of the side protective beam is opposite to a middle position of the power battery pack in the third direction.

In a possible implementation, a protective plate is arranged at a bottom of the frame; and the protective plate is located on one side of the frame facing a ground, and the protective plate is opposite to the bottom of the power battery pack and used for protecting the bottom of the power battery pack.

In a possible implementation, the frame includes longitudinal beams that extend in the first direction; a distance between the protective frame and the side girder in the second direction is configured as a first crumple distance L₁; a distance between the side girder and the power battery pack in the second direction is configured as a second crumple distance L₂; a distance between the protective plate and a top surface of the longitudinal beam in the third direction is configured as a third crumple distance L₃; a distance between the top surface of the longitudinal beam and the bottom of the power battery pack in the third direction is configured as a fourth crumple distance L₄; and the first crumple distance L₁ is greater than the second crumple distance L₂.

In a possible implementation, the frame further includes transverse beams opposite to the avoidance portion; and a longitudinal beam is provided with a transverse beam installation position, the transverse beam is detachably installed to the transverse beam installation position, and the transverse beam is opposite to the avoidance portion.

In a possible implementation, the vehicle further includes a handbrake and a gear shifter; and the handbrake and the gear shifter are arranged between the first seat and the second seat, and are located above the power battery pack.

In a possible implementation, the vehicle is a hybrid all-terrain vehicle, and the vehicle further includes a fuel tank assembly and a drive motor; in the first direction, the frame includes a cab and a power compartment, the first seat and the second seat are arranged in the cab at intervals in the second direction, and the fuel tank assembly is arranged in the power compartment; the power battery pack is used for providing power to the drive motor, and the power battery pack is arranged on the frame; and the avoidance portion is located between the first seat and the second seat.

In a possible implementation, in the second direction, the fuel tank assembly is located at any position in a left side, a right side and a middle position of the power battery pack.

In a possible implementation, the all-terrain vehicle further includes a motor thermal management system, an engine thermal management system and an engine located in the power compartment; and a first pipeline of the engine thermal management system and a second pipeline of the motor thermal management system are arranged to cooperate with the avoidance portion, so that the first pipeline and the second pipeline extend in the avoidance portion.

An embodiment of the present invention further provides a power battery pack, including a first housing, a second housing and at least one battery module; where in the third direction, the first housing is arranged above the second housing, the first housing and the second housing are connected to form an accommodating cavity, and the battery module is arranged in the accommodating cavity; and at least part of the second housing is recessed in the third direction toward one side of the first housing and forms an avoidance portion, and two ends of the avoidance portion in the first direction extend to a front side and a rear side of the second housing respectively.

In a possible implementation, in the second direction, the accommodating cavity includes a first accommodating space and a second accommodating space, which are communicated with each other; and the first accommodating space and the second accommodating space are distributed on both sides of the avoidance portion.

In a possible implementation, the power battery pack includes a first battery module and a second battery module which are connected in series; and the first battery module is arranged in the first accommodating space and is located below the first seat, and the second battery module is arranged in the second accommodating space and is located below the second seat.

In a possible implementation, the first housing is provided with a bulge portion that cooperates with the avoidance portion; the bulge portion is opposite to the avoidance portion, and a third space is formed between the bulge portion and the avoidance portion; the third space is communicated with the first accommodating space and the second accommodating space respectively; the power battery pack further includes a high-voltage control unit that is electrically connected to the battery module; and the high-voltage control unit is arranged in the third space, and a top surface of the bulge portion is provided with an overhaul window for the high-voltage control unit to be overhauled.

In a possible implementation, a cross-section of the avoidance portion in the second direction is n-shaped.

In a possible implementation, the second housing is provided with a plurality of mounting lugs along its circumference; and each of the mounting lugs is integrally provided with a mounting hole and a hoisting hole.

In a possible implementation, the power battery pack further includes at least one balance valve that is communicated with the accommodating cavity; and the balance valve is arranged on the second housing, and the balance valve is configured to keep pressures inside and outside the accommodating cavity balanced.

In a possible implementation, the power battery pack further includes a battery thermal management system; and the second housing is further provided with a water inlet and a water outlet that are communicated with the accommodating cavity; and the water inlet and the water outlet are respectively connected to a pipeline of the battery thermal management system.

In a possible implementation, the power battery pack further includes a first high-voltage output port and a second high-voltage output port; and the first high-voltage output port is configured as a positive electrode output port, the second high-voltage output port is configured as a negative electrode output port, and the first high-voltage output port and the second high-voltage output port cooperate to provide a high-voltage current to an outside.

Compared with the prior art, the vehicle (preferably, a hybrid all-terrain vehicle) provided by the embodiment of the present invention has the following advantages.

According to the vehicle provided by the embodiment of the present invention, the avoidance portion that cooperates with the transmission shaft is arranged at the bottom of the power battery pack, so that when the power battery pack is installed on the frame, part of the power battery pack is located below the first seat, the rest of the power battery pack is located below the second seat, the avoidance portion is located between the first seat and the second seat, and the transmission shaft is located in the avoidance portion and extends in the first direction, thereby avoiding the interference of the power battery pack and the transmission shaft.

According to the power battery pack provided by the embodiment of the present invention, the second housing is provided with the avoidance portion, and two ends of this avoidance portion extend to the front side and the rear side of the second housing respectively. When the power battery pack is installed on the frame of the all-terrain vehicle, the avoidance portion forms an avoidance space for other components of the all-terrain vehicle to pass through. For example, the transmission shaft of the all-terrain vehicle extends in the first direction (a front-rear direction of the frame), and the transmission shaft passes through the avoidance portion.

Compared with the scheme in which a power battery pack in the related art adopts a split structure, the power electric pack in the embodiment of the present invention adopts an integral structure and has the avoidance portion that cooperates with the transmission shaft. In this way, the power battery pack can be installed to the frame in a reasonable manner and the layout of the whole vehicle can be optimized, and the integration level and overall structural strength of the power battery pack can also be promoted.

In addition to the technical problems solved by the embodiments of the present disclosure, the technical features constituting the technical solutions and the beneficial effects brought about by the technical features of the technical solutions described above, other technical problems that can be solved by the vehicle and the power battery pack thereof provided by the embodiments of the present disclosure, other technical features contained in the technical solutions and the beneficial effects brought about by these technical features will be further explained in detail in the specific implementations.

### BRIEF DESCRIPTION OF THE DRAWINGS

To describe the embodiments of the present invention or the technical solutions in the prior art more clearly, the following briefly introduces the accompanying drawings required for describing the embodiments or the descriptions in the prior art. Apparently, the accompanying drawings in the following description show merely some embodiments of the present invention, and a person of ordinary skill in the art may still derive other drawings from these accompanying drawings without creative efforts.
FIG. 1 is an equiaxial side view of a hybrid all-terrain vehicle provided by an embodiment of the present invention.
FIG. 2 is a front view of the hybrid all-terrain vehicle provided by the embodiment of the present invention.
FIG. 3 is a sectional view taken along A-A in FIG. 2.
FIG. 4 is an enlarged schematic diagram at B in FIG. 3.
FIG. 5 is a bottom view of the hybrid all-terrain vehicle provided by the embodiment of the present invention.
FIG. 6 is an equiaxial side view of a power battery pack provided by an embodiment of the present invention.
FIG. 7 is a top view of the power battery pack provided by the embodiment of the present invention.
FIG. 8 is a schematic distribution diagram of a first battery module, a second battery module and a high-voltage control unit provided by an embodiment of the present invention.
FIG. 9 is a front view of the power battery pack provided by the embodiment of the present invention.
FIG. 10 is a rear view of the power battery pack provided by the embodiment of the present invention.

Reference symbol represents the following component:
10-frame;
11-side girder; 12-protective frame; 13-side protective beam; 14-protective plate; 15-longitudinal beam; 16-transverse beam;
21-first seat; 22-second seat;
30-power battery pack;
31-avoidance portion; 32-first housing; 33-second housing;
40-transmission shaft;
50-fuel tank assembly;
60-handbrake;
70-gear shifter
80-first pipeline;
90-second pipeline;
100-hybrid all-terrain vehicle;
101-first space, cab; 102-second space, power compartment;
111-bulge portion; 112-overhaul window;
120-mounting lug;
130-first battery module;
140-second battery module;
150-high-voltage control unit;
160-balance valve;
171-water outlet; 172-water inlet; and
181-first high-voltage output port; 182-second high-voltage output port; 183-high-voltage output connector; 184-low-voltage communication connector; and 185-DCDC connector.

### DETAILED DESCRIPTION OF THE EMBODIMENTS

Since a power battery pack of an all-terrain vehicle in the related art is unreasonable, the layout of the power battery pack on a frame is unreasonable, so the optimization on the whole vehicle cannot be achieved. The researches of the inventor have found that the reason for this problem is that: the power battery pack cooperates with other structures of the all-terrain vehicle when it is arranged on the frame. For example, the all-terrain vehicle includes a transmission shaft that extends in a front-rear direction of the frame. In order to avoid the interference between the power battery pack and the transmission shaft, the power battery pack usually adopts a split structure, the power battery pack is divided into two parts arranged at intervals, and the transmission shaft passes through this interval space. At present, the existing power battery pack has low integration level, and has a structural form that affects the overall layout of the all-terrain vehicle.

In view of the above problem, embodiments of the present invention provide a vehicle and a power battery pack thereof. Through the improvement on the power battery pack, an avoidance portion that cooperates with the transmission shaft is arranged at the bottom of the power battery pack, so that when the power battery pack is installed on the frame of the all-terrain vehicle, the avoidance portion forms an avoidance space for the transmission shaft to pass through. In this way, the power battery pack can be installed to the frame in a reasonable manner to provide power to a power system of the vehicle and the layout of the whole vehicle can be optimized, and the integration level and the overall structural strength of the power battery pack can also be improved.

In order to make the objects, technical solutions and advantages of the embodiments of the present invention understood obviously, the technical solutions in the embodiments of the present invention will be clearly and completely described below. Of course, the described embodiments are merely some embodiments, rather than all embodiments, of the present invention as defined by the appended claims.

In order to facilitate the description of the hybrid all-terrain vehicle provided by the embodiment of the present invention, a coordinate system in the accompanying drawing needs to be described, where an X-axis direction is a first direction, and the first direction is defined as a front-rear direction of the hybrid all-terrain vehicle and a front-rear direction of the battery pack; a Y-axis direction is a second direction, and the second direction is defined as a left-right direction of the hybrid all-terrain vehicle and a left-right direction of the battery pack; and a Z-axis direction is a third direction, and the third direction is defined as an up-down direction of the hybrid all-terrain vehicle and an up-down direction of the power battery pack.

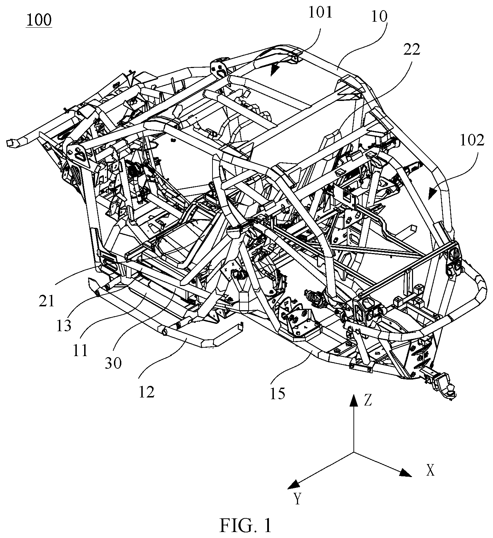

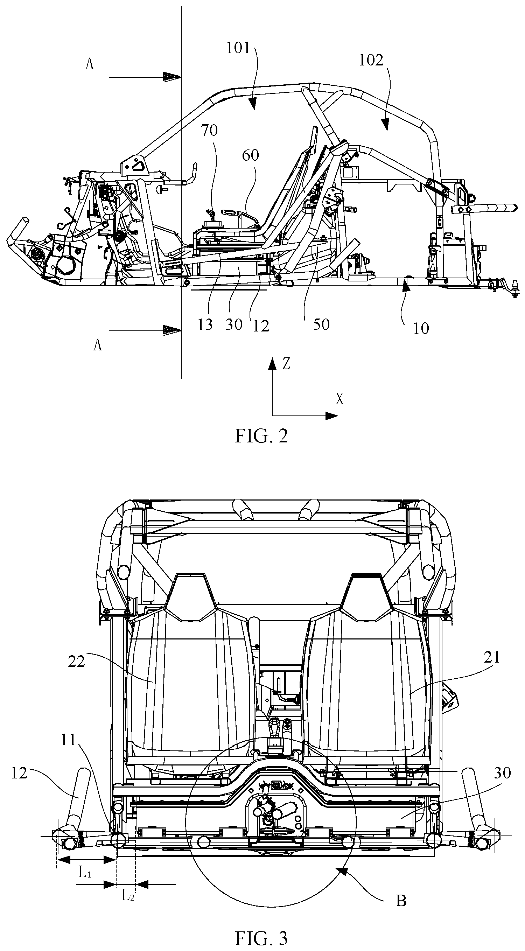

As shown in FIG. 1 and FIG. 2, the vehicle provided by the embodiment of the present invention may be a hybrid all-terrain vehicle 100. A drive system of the hybrid all-terrain vehicle 100 employs a conventional engine and electric motor as a power source, where the engine may include a diesel engine or a gasoline engine and other engines that have been modified to use other alternative materials as power devices, such as compressed natural gas, propane and ethanol fuel, etc.

It should be noted that the hybrid all-terrain vehicle 100 refers to a vehicle where a drive system is jointly composed of two or more single drive units that can operate at the same time, and a driving power of the vehicle is provided by a single drive unit alone or single drive units jointly according to an actual vehicle driving state.

In the embodiment of the present invention, the hybrid all-terrain vehicle 100 includes a hybrid mode and a pure electric mode, where the switching of the mode can be controlled manually or the switching of the mode can be automatically conducted, which is automatically controlled by a computer module of the vehicle in general cases. The hybrid all-terrain vehicle 100 is powered by a drive motor in a smooth start stage in the case of full fuel and full charge, by taking the drive motor as an auxiliary power of the engine to drive the vehicle. The engine will start only when the speed reaches a certain value. When the vehicle travels at a constant high speed, the engine works at the same time in order to keep the engine at a relatively economical speed.

Further, the all-terrain vehicle provided by the embodiment of the present invention further includes a power battery pack 30, a fuel tank assembly 50, a transmission shaft 40 and a frame 10, where the power battery pack 30 and the fuel tank assembly 50 are respectively arranged on the frame 10, and the power battery pack 30 is used for providing power to a drive motor; and the fuel tank assembly 50 is used for providing a fuel to the engine, so that the engine does work and outputs power.

In the first direction, the frame 10 includes a first space 101 and a second space 102, where the first space 101 may be a cab, the second space 102 may be a power compartment, and the engine and the fuel tank assembly 50 are arranged in the power compartment 102. The cab 101 is further provided with a first seat 21 and a second seat 22, where the first seat 21 and the second seat 22 are arranged on the frame 10. In the second direction, the first seat 21 and the second seat 22 are arranged at intervals. For example, the first seat 21 may be a driver seat, and the second seat 22 may be a co-driver seat.

The transmission shaft 40 in the embodiment of the present invention may extend in the first direction. The transmission shaft 40 is connected to a switching structure, and is also in transmission connection with the drive motor or the engine respectively through the switching structure. In this way, when the hybrid all-terrain vehicle is in a pure electric mode, the transmission shaft 40 is in transmission connection with the drive motor through the switching structure; or when the hybrid all-terrain vehicle 100 is in a fuel mode, the transmission shaft 40 is in transmission connection with the engine through the switching structure.

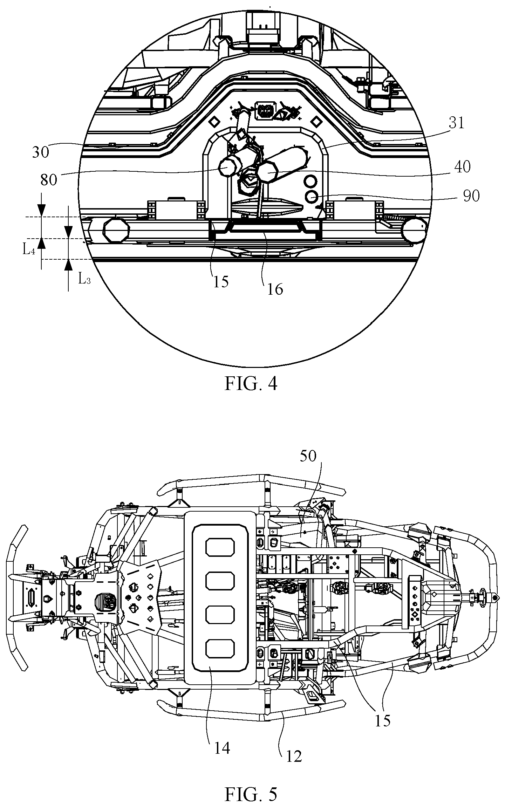

As shown in FIG. 3 and FIG. 4, in the embodiment of the present invention, part of the transmission shaft 40 is located in the power compartment 102 (the transmission shaft 40 may extend in the first direction, and the part of the transmission shaft 40 is located in the power compartment 102), the rest of the transmission shaft 40 is located in the cab 101, and the transmission shaft 40 may be arranged between the first seat 21 and the second seat 22, so that the power from the engine or electric motor can be transferred from the power compartment 102 to the cab 101 and further to front wheels of the all-terrain vehicle.

Correspondingly, in order to avoid the interference of the power battery pack 30 and the transmission shaft 40, in the embodiment of the present invention, an avoidance portion 31 that cooperates with the transmission shaft 40 is arranged at the bottom of the power battery pack 30. The avoidance portion 31 is configured such that when the power battery pack 30 is installed on the frame 10, the avoidance portion 31 forms an avoidance space, so that the transmission shaft 40 passes through the avoidance portion 31 and extends in the first direction.

Specifically, the power battery pack 30 is of a rectangular structure as a whole, where its length direction is arranged in the second direction, and its width direction is arranged in the first direction. In the third direction, part of the power battery pack 30 is located in an accommodating space between the first seat 21 and the frame 10, and the rest of the power battery pack 30 is located in an accommodating space between the second seat 22 and the frame 10. In other words, part of the power battery part is arranged below the first seat 21, and the rest of the power battery pack 30 is arranged below the second seat 22. In this way, a space between the seat and the frame 10 can be fully utilized to optimize the layout of the whole vehicle.

The avoidance portion 31 is arranged at the bottom of the power battery pack 30. When the power battery pack 30 is installed on the frame 10, the avoidance portion 31 extends in the first direction, and the avoidance portion 31 is located between the first seat 21 and the second seat 22 in the second direction. That is, the avoidance space is formed between the avoidance portion 31 and the frame 10, the avoidance portion 31 is arranged to cooperate with the transmission shaft 40, and the transmission shaft 40 may extend in the avoidance portion 31 in the first direction.

Based on the above embodiment, the fuel tank assembly 50 in the embodiment of the present invention is arranged in the power compartment 102; and in the first direction, the fuel tank assembly 50 is arranged at the rear of the first seat 21 or the rear of the second seat 22.

Specifically, an arrangement position of the fuel tank assembly 50 in the power compartment is as follows: in the first direction, the fuel tank assembly 50 is arranged at the rear of the first seat 21, or the fuel tank assembly 50 is arranged at the rear of the second seat 22; and the fuel tank assembly 50 may be arranged at the rear of the middle position of the first seat 21 and the second seat 22, which will not be limited in this embodiment.

Based on the above embodiment, the fuel tank assembly 50 in the embodiment of the present invention is arranged in the power compartment 102; and in the first direction, the fuel tank assembly 50 is arranged at the rear of the power battery pack 30. That is, the power battery pack 30 is arranged in the cab 101 relative to the fuel tank assembly 50.

Further, a position of the fuel tank assembly 50 relative to the power battery pack 30 in the second direction is as follows: the fuel tank assembly 50 may be arranged on the left side or the right side or the middle position of the power battery pack 30, that is, the fuel tank assembly 50 may be arranged in any position on the rear left side, the rear right side and the middle position of the power battery pack 30, which will not be limited in this embodiment.

As shown in FIG. 5, further, because an applicable environment of the all-terrain vehicle is more complex, in order to protect the power battery pack 30, in this embodiment of the present invention, a protective plate 14 is also arranged at the bottom of the frame 10. The protective plate 14 is detachably installed on one side of the frame 10 away from the power battery pack 30, that is, in the third direction, the protective plate 14 is arranged on a side of the whole frame 10 facing the ground.

In the third direction, the protective plate 14 is located below the power battery pack 30 and is opposite to the power battery pack 30. That is, a projection of the protective plate 14 in the third direction relative to the frame 10 covers at least a projection of the power battery pack 30 on the frame 10. The protective plate 14 may be made of metal or plastic or other high-strength materials, e.g., glass reinforced plastic and high-strength plastic, etc. In this way, it can be ensured that the protective plate 14 can protect the power battery pack 30, especially the bottom of the power battery pack 30, thereby improving the reliability of the power battery pack 30.

Based on the above embodiment, the frame 10 in this embodiment of the present invention further includes protective structures arranged on both sides thereof. That is, in the second direction, the protective structure is arranged on each side of the frame 10, and each protective structure includes a protective frame 12 and a side protective beam 13.

In the second direction, the frame 10 includes side girders 11 located on both sides thereof, and a protective frame 12 is arranged on an outer side of a corresponding side girder 11, both of which are kept at a certain distance in the second direction. The side protective beam 13 is arranged above the corresponding side girder 11 in the third direction. For example, each side protective beam 13 can be arranged obliquely in the third direction, and part of the side protective beams 13 are opposite to the power battery pack 30.

The protective frames 12 and the side protective beams 13 are both fixedly connected to a body of the frame 10, so that the side girders 11, the side protective beams 13 and the protective frames 12 jointly form a protective space, so the risk of the power battery pack 30 being impacted from a side can be reduced.

Further, the side protective beams 13 in this embodiment of the present invention are configured so that when the power battery pack 30 is installed on the frame 10, part of the side protective beam 13 is opposite to the middle position of the power battery pack 30 in the third direction. It should be noted that the middle position of the power battery pack 30 in this embodiment of the present invention may be a top area of the second housing 33.

In this way, the middle position of the power battery pack 30 has a largest stress area, so the risk of damage when the power battery pack 30 is impacted can be further reduced. The "middle position" can be adjusted according to a specific structure of the power battery pack 30, which will not be limited in this embodiment.

Continued to FIG. 3 and FIG. 4, in some embodiments, a distance between the protective frame 12 and the side girder 11 in the second direction is configured as a first crumple distance L₁; a distance between the side girder 11 and the power battery pack 30 in the second direction is configured as a second crumple distance L₂; and the first crumple distance L₁ is greater than the second crumple distance L₂.

It should be noted that, each side protective beam 13 is located above the corresponding side girder 11; and in the third direction, projections of the side protective beam 13 and the side girder 11 relative to the ground may coincide with each other, that is, the first crumple distance L₁ may also be regarded as a distance between the protective frame 12 and the side protective beam 13 in the second direction, and the second crumple distance L₂ may also be regarded as a distance between the side protective beam 13 and the power battery pack 30 in the second direction. The description here will be made by taking the side girder 11 as an example.

In the second direction, a distance between the outermost side of the protective frame 12 and the outermost side of the side girder 11 is defined as the first crumple distance L₁, and the first crumple distance L₁ refers to: a deformation distance between the protective frame 12 and the side girder 11 when a side of the all-terrain vehicle is impacted, and is used for absorbing impact energy.

Similarly, a distance between the outermost side of the side girder 11 and the outermost side of the power battery pack 30 is defined as the second crumple distance L₂, and the second crumple distance L₂ refers to: a deformation distance between the power battery pack 30 and the side girder 11 when a side of the all-terrain vehicle is impacted, and is used for absorbing impact energy.

Further, the first crumple distance L₁ is greater than the second crumple distance L₂. In this way, when a side of the all-terrain vehicle is impacted, the protective frames 12 and the side girders 11 form a first protective barrier to the power battery pack 30, thereby avoiding the power battery pack 30 from being impacted and improving its reliability.

It should be noted that in some embodiments, a ratio of a sum of the first crumple distance L₁ and the second crumple distance L₂ to a width of the whole vehicle ranges 0.1 from 0.2. In this way, the side protection of the power battery pack 30 can be further improved, and the power battery pack 30 can be avoided from being impacted, thereby improving its reliability.

Continued to FIG. 4, in this embodiment of the present invention, a crumple distance is formed between the protective plate 14 and a chassis of the frame 10. Specifically, the frame 10 includes longitudinal beams 15, where part of the longitudinal beams 15 are configured as the chassis of the frame 10. A distance between the protective plate 14 and a top surface of the longitudinal beam 15 in the third direction is defined as the third crumple distance L₃. The third crumple distance L₃ refers to: a deformation distance between the protective plate 14 and the longitudinal beam 15 when a bottom surface of the all-terrain vehicle is impacted, and is used for absorbing impact energy.

Similarly, a distance between the bottom of the power battery pack 30 and the top surface of the longitudinal beam 15 in the third direction is defined as the fourth crumple distance L₄. The fourth crumple distance L₄ refers to: a deformation distance between the top surface of the longitudinal beam 15 and the bottom of the power battery pack 30 when the bottom surface of the all-terrain vehicle is impacted, and is used for absorbing impact energy.

Further, a ratio of the third crumple distance L₃ to the fourth crumple distance L₄ is not less than 1. In this way, when the bottom surface of the all-terrain vehicle is impacted, the protective plates 14 and the longitudinal beams 15 can form a protective barrier for the power battery pack 30, thereby avoiding the bottom of the power battery pack 30 from being impacted and improving its reliability.

The all-terrain vehicle provided by the embodiment of the present invention further includes a motor thermal management system, and an engine thermal management system, where the engine thermal management system includes a first pipeline 80, and the motor thermal management system includes a second pipeline 90. The engine thermal management system and the motor thermal management system can be cooled in a water-cooling mode. That is, a coolant or other cooling medium flows in the first pipeline 80 and the second pipeline 90 to take away heat of the engine or the motor and diffuse the heat into the environment, such that the engine and the motor are cooled.

The first pipeline 80 and the second pipeline 90 are arranged to cooperate with the avoidance portion 31, so that the first pipeline 80 and the second pipeline 90 pass through the avoidance portion 31 and extend in the avoidance portion 31 in the first direction, so that the first pipeline 80 and the second pipeline 90 are arranged in the cab 101 and the power compartment 102.

In the embodiment of the present invention, the frame 10 further includes transverse beams 16 opposite to the avoidance portion 31, where the transverse beams 16 are arranged in the second direction. A position of each longitudinal beam 15 close to the transverse beam 16 is broken to form a transverse beam installation position. The transverse beam installation position is used for accommodating the transverse beam 16, and the transverse beam 16 is detachably installed to the transverse beam installation position. When the transverse beams 16 are installed to the frame 10, the transverse beams 16 are opposite to the avoidance portion 31.

In this way, when the transmission shaft 40, the first pipeline 80 and the second pipeline 90 that pass through the avoidance portion 31 need to be overhauled, the transverse beam 16 can be disassembled to form an overhaul opening, and then the transmission shaft 40 and pipeline accessories in the avoidance portion 31 can be conveniently overhauled or disassembled.

In this embodiment of the present invention, the hybrid all-terrain vehicle 100 further includes a handbrake 60 and a gear shifter 70, where the handbrake 60 is connected to the braking system, and the handbrake 60 can be operated to brake the vehicle. The gear shifter 70 is connected to a transmission of the vehicle. A driving speed of the vehicle can be controlled or adjusted by the gear shifter 70.

In order to further optimize the layout of the whole vehicle, in this embodiment of the present invention, the handbrake 60 and the gear shifter 70 are arranged between the first seat 21 and the second seat 22 and are located above the power battery pack 30, which is not only conducive to operating the handbrake 60 and the gear shifter 70, and is also capable of optimizing the layout of the whole vehicle.

The power battery pack provided by the embodiment of the present invention is applied to an all-terrain vehicle, where the all-terrain vehicle may be a hybrid all-terrain vehicle or a pure electric all-terrain vehicle, which is not limited in this embodiment of the present invention. The power battery pack is used for providing power to the power system of the all-terrain vehicle, so that the all-terrain vehicle moves forward, backward or steers, etc.

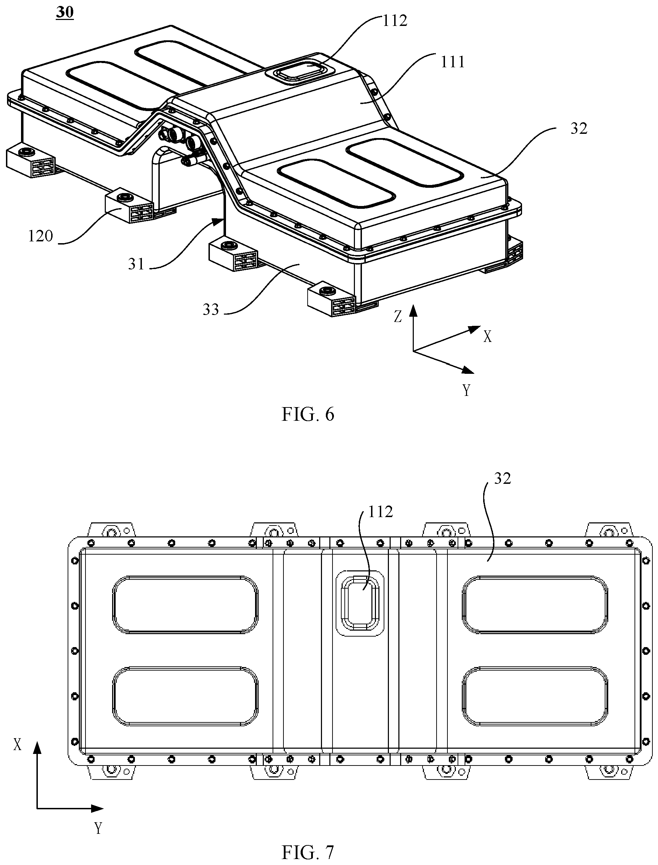

As shown in FIG. 6 and FIG. 7, the power battery pack 30 provided by the embodiment of the present invention includes a first housing 32, a second housing 33 and at least one battery module. In the third direction, the first housing 32 is arranged above the second housing 33, both of which are detachably connected together to form an accommodating cavity. The accommodating cavity may at least accommodate the battery module and electrical components matched with the battery module.

At least part of the second housing 33 is recessed in the third direction toward one side of the first housing 32 and forms the avoidance portion 31. For example, in the second direction, the middle position of the second housing 33 is recessed upward and forms the avoidance portion 31. The cross-section of the avoidance portion 31 in the second direction is n-shaped. In other words, a projection of the avoidance portion 31 on the front side or rear side of the power battery pack 30 is n-shaped, and an opening of the avoidance portion 31 faces downward.

Further, the avoidance portion 31 has a certain width and length, where its width direction is consistent with the second direction, and its length direction is consistent with the first direction. In the first direction, one end of the avoidance portion 31 extends to the front side of the second housing 33, and the other end of the avoidance portion 31 extends to the rear side of the second housing 33, that is, the avoidance portion 31 runs through the entire second housing 33 in the first direction.

When the power battery pack 30 provided by the embodiment of the present invention is installed on the frame of the all-terrain vehicle, the avoidance portion 31 forms an avoidance space for other components of the all-terrain vehicle to pass through. For example, the transmission shaft of the all-terrain vehicle extends in the first direction (a front-rear direction of the frame), and the transmission shaft passes through the avoidance portion 31.

Compared with the power battery pack in the related rate that adopts a split structure, the power battery pack 30 includes two parts which are arranged at intervals, and the interval space is used for accommodating the transmission shaft of the all-terrain vehicle. However, the power battery pack in the embodiment of the present invention adopts an integral structure, in which the first housing 32 and the second housing 33 are connected together, and the avoidance portion 31 for accommodating the transmission shaft is arranged at the bottom of the second housing 33. In this way, the layout of the whole vehicle can be optimized, and the overall structural strength of the power battery pack 30 can also be promoted.

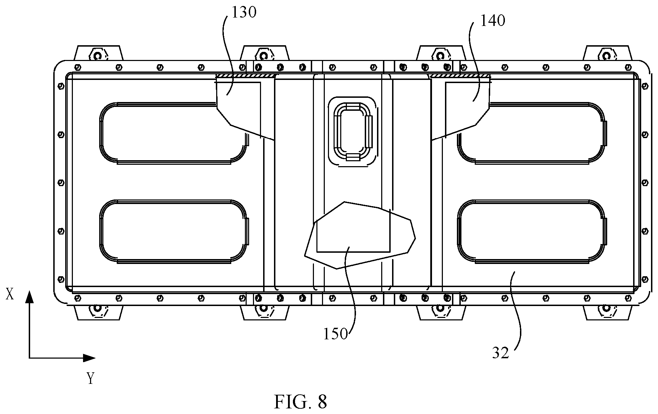

As shown in FIG. 8, in the embodiment of the present invention, the first housing 32 and the second housing 33 are connected together to form the accommodating cavity, and the accommodating cavity includes a first accommodating space and a second accommodating space which are communicated with each other. In the second direction, the first accommodating space and the second accommodating space are distributed on both sides of the avoidance portion 31.

Further, the power battery pack 30 includes a first battery module 130 and a second battery module 140, where the first battery module 130 is arranged in the first accommodating space, the second battery module 140 is arranged in the second accommodating space, and the first battery module 130 is connected in series with the second battery module 140. In this way, the avoidance portion may also be formed between the first accommodating space and the second accommodating space conveniently.

In order to expand an internal space of the accommodating cavity, the first housing 32 is provided with a bulge portion 111 that cooperates with the avoidance portion 31. The bulge portion 111 is opposite to the avoidance portion 31, and a third space is formed between the bulge portion 111 and the avoidance portion 31. The third space is communicated with the first accommodating space and the second accommodating space.

Exemplarily, in the second direction, the middle position of the first housing 32 protrudes upward and forms the bulge portion 111. In the first direction, two ends of the bulge portion 111 extend to the front side and the rear side of the power battery pack 30 respectively, that is, the bulge portion 111 is opposite to the avoidance portion 31. A shape of a projection of the bulge portion 111 on the front side or the rear side is identical. For example, the shape of the bulge portion 111 may be n-shaped or may be an isosceles trapezoid.

When the first housing 32 is connected to the second housing 33, the bulge portion 111 is opposite to the avoidance portion 31, and the third space is formed between the bulge portion 111 and the avoidance portion 31. In the second direction, one side of the third space is communicated with the first accommodating space, and the other side of the third space is communicated with the second accommodating space. Therefore, the third space may be conducive to accommodating a control unit for the first battery module 130 and the second battery module 140, such that the structural layout of the entire power battery pack 30 can be optimized.

Further, the control unit is a high-voltage control unit 150, that is, the power battery pack 30 includes the high-voltage control unit 150. The high-voltage control unit 150 is connected to the first battery module 130 and the second battery module 140 respectively, and then each battery module is effectively controlled to control a working state of the whole power battery pack 30.

In the embodiment of the present invention, the high-voltage control unit 150 includes a current sensor, a pre-charging resistor, a pre-charging relay, a main positive relay, a main negative relay, a main fuse, etc. In particular, the main fuse of the high-voltage control unit 150 needs to be overhauled and replaced, so as to improve the operation safety of the power battery pack 30. In order to facilitate the overhaul of the high-voltage control unit 150, in the embodiment of the present invention, the high-voltage control unit 150 is arranged in the third space, and an overhaul window 112 is arranged on the top surface of the bulge portion 111. The high-voltage control unit 150 can be conveniently overhauled through the overhaul window 112.

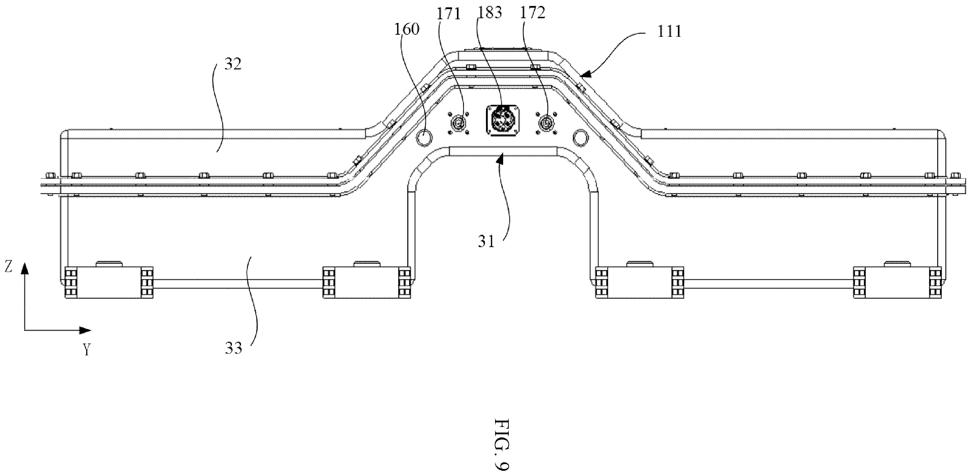

As shown in FIG. 9, the power battery pack 30 provided by the embodiment of the present invention further includes at least one balance valve 160. The balance valve 160 is communicated with the accommodating cavity, and the balance valve 160 is configured to keep pressures inside and outside the accommodating cavity balanced. The balance valve 160 may be a breathable valve or an explosion-proof valve, which will not be limited in this embodiment. Exemplarily, the balance valve 160 is arranged on the second housing 33 and is located on the front side or rear side of the second housing 33. Further, the balance valve 160 is located above the avoidance portion 31, and the balance valve 160 is communicated with the third space.

For example, the power battery pack 30 is provided with two balance valves 160; and in the second direction, the two balance valves 160 are respectively arranged above the avoidance portion 31 at intervals, and an interface for other electrical components may also be arranged between the two balance valves 160. In this way, in view of the fact that an invention environment of the all-terrain vehicle to which the power battery pack 30 is applied is relatively complex, the balance valve 160 is easily blocked, so the power battery pack 30 provided by the embodiment of the present invention is provided with two balance valves 160, which can improve the reliability of the balance valves 160.

Further, the power battery pack 30 provided by the embodiment of the present invention further includes a battery thermal management system. The battery thermal management system is used for controlling a working temperature of the power battery pack 30. The battery thermal management system includes a circulating pipeline, a water heater (W-PTC), a battery heat exchanger (AC-chiller), an air conditioner and a water pump, etc. The power battery pack 30 is cooled or heated through a cooling medium in the circulating pipeline.

Correspondingly, the power battery pack 30 is provided with a water inlet 172 and a water outlet 171 that are communicated with the circulating pipeline, and the water inlet 172 and the water outlet 171 may be communicated with the accommodating cavity, so that the cooling medium in the circulating pipeline enters a liquid cooling plate arranged in the accommodating cavity through the water inlet 172 for heat exchange, and the cooling medium after heat exchange flows out of the accommodating cavity through the water outlet 171 and then into the circulating pipeline again.

It should be noted that in the embodiment of the present invention, the power battery pack adopts a liquid cooling mode, and the cooling medium may be an ethylene glycol-type antifreeze. When the power battery pack 30 needs to be cooled, the heat of the power battery pack 30 is transferred to the antifreeze through the liquid cooling plate and is taken away by the antifreeze. Under the action of a water pump, the antifreeze in the circulating pipeline flows to the battery heat exchanger (AC-Chiller), and exchanges heat with the battery heat exchanger, so that the temperature of the antifreeze in the circulating pipeline decreases, thereby achieving the purpose of reducing a battery temperature.

When the power battery pack 30 needs to be heated, the antifreeze in the circulating pipeline can be heated by the water heater (W-PTC), such that the temperature of the antifreeze rises. The antifreeze in the circulating pipeline is circulated by the water pump, so that the heat generated by W-PTC is transferred to the liquid cooling plate through the antifreeze, and then to the power battery pack through the liquid cooling plate, thereby achieving the purpose of heating the power battery pack.

Further, the water inlet 172 and the water outlet 171 in the embodiment of the present invention are formed in the second housing 33 and are located on the front side or rear side of the second housing 33. For example, the water inlet 172 and the water outlet 171 are located on the same side of the second housing 33 together with the balance valves 160, and the water inlet 172 and the water outlet 171 are located between the two balance valves 160.

In order to optimize the layout of the power battery pack 30, the high-voltage output port of the power battery pack 30 in the embodiment of the present invention is located on the other side of the second housing 33, and may be opposite to the water inlet 172 and the water outlet 171. For example, the water inlet 172, the water outlet 171 and the balance valves 160 are arranged on the front side of the second housing 33, and the high-pressure output port may be formed in the rear side of the second housing 33.

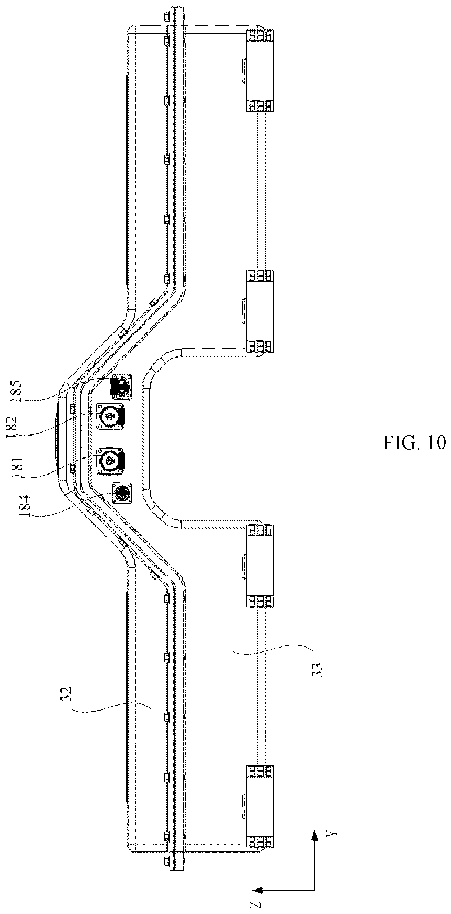

As shown in FIG. 10, the power battery pack 30 further includes a first high-voltage output port 181 and a second high-voltage output port 182, where the first high-voltage output port 181 is configured as a positive electrode output port, the second high-voltage output port 182 is configured as a negative electrode output port, and the first high-voltage output port 181 and the second high-voltage output port 182 are connected in series and cooperate to provide a high-voltage current to the outside. Each high-voltage output port may be a single-core connector, a dual-core connector or a through-hole connector, and is connected to other components in a throwing line mode of the through-hole connector.

Further, the power battery pack 30 further includes a high-voltage output connector 183, a low-voltage communication connector 184 and a DCDC connector 185, where the high-voltage output connector 183 is arranged between the water inlet 172 and the water outlet 171, and the high-voltage output connector 183 is used for connecting an air conditioner of the whole battery thermal management system with a high-voltage output port of the water heater.

The low-voltage communication connector 184 is used for the connection of low-voltage power supply, data transmission and control. The DCDC connector 185 is used for the high-voltage connection of an on-board charger or an on-board DC converter or an all-in-one on-board charger, where the first high-voltage output port 181 and the second high-voltage output port 182 may be formed between the low-voltage communication connector 184 and the DCDC connector 185.

Based on the above embodiment, in order to facilitate the installation of the power battery pack 30 on the frame, or to facilitate the removal of the power battery pack 30 from the frame, the power battery pack 30 provided by the embodiment of the present invention includes a plurality of mounting lugs 120, where the plurality of mounting lugs 120 may be arranged on the second housing 33 at intervals in a circumferential direction of the second housing 33.

Further, each mounting lug 120 is integrally provided with a mounting hole and a hoisting hole. The power battery pack 30 may be hoisted to a frame preset position through the hoisting hole. When the power battery pack 30 is installed in place, a fastener may be inserted into the mounting hole, such that power battery pack 30 is fixed to the frame.

The respective embodiments or implementations of the present description are described in a progressive manner, the focus of each embodiment illustrates the differences from other embodiments, and the same similar parts among the embodiments may refer to one another.

It should be noted that "one embodiment", "an embodiment", "an exemplary embodiment", "some embodiments", etc., mentioned in the description, indicate that the embodiments may include a specific feature, structure or characteristic, but each embodiment may not necessarily include that particular feature, structure or characteristic. Moreover, such phrases do not necessarily refer to the same embodiment. In addition, when the specific feature, structure or characteristic is described in conjunction with an embodiment, the realization of such a feature, structure or characteristic in conjunction with other embodiments explicitly or not explicitly described is within the knowledge of those skilled in the art.

In general, terms should be understood, at least in part, by their contextual use. For example, depending on the context, at least in part, the term "one or more" used in the text may be used to describe any feature, structure, or characteristic of the meaning of the singular form, or a combination of feature, structure or characteristic that may be used to describe the meaning of the plural form. Similarly, at least in part, depending on the context, terms such as "one" or "the" can be understood to convey singular usages or to convey plural usages.

It should be eventually noted that: the above embodiments are merely used to illustrate the technical solutions of the present invention, but are not limited thereto. The invention is defined in the appended claims.

## Claims

1. A vehicle, comprising a frame (10), a first seat (21), a second seat (22), a power battery pack (30) and a transmission shaft (40); wherein
the first seat (21) and the second seat (22) are arranged at intervals in a second direction; in a third direction, part of the power battery pack (30) is located in a space between the first seat (21) and the frame (10), and rest of the power battery pack (30) is located in a space between the second seat (22) and the frame (10); and
an avoidance portion (31) that is recessed upward in the third direction is arranged at a bottom of the power battery pack (30), and the avoidance portion (31) extends to a front side and a rear side of the power battery pack (30) in a first direction; the avoidance portion (31) is arranged to cooperate with the transmission shaft (40); and the transmission shaft (40) penetrates through the avoidance portion (31) and extends in the first direction;
**characterized in that**
the frame (10) further comprises side girders (11), protective frames (12) and side protective beams (13);
in the second direction, a protective frame (12) is located on an outer side of a corresponding side girder (11); in the third direction, the side protective beam (13) is located above the corresponding side girder (11);
the side girders (11), the protective frames (12) and the side protective beams (13) form a protective space for the power battery pack (30), wherein the side protective beams (13) are arranged obliquely in the third direction;
in the second direction, the protective frame (12) and the corresponding side protective beam (13) are arranged on each side of the frame (10), respectively; and
the side protective beam (13) is configured so that when the power battery pack (30) is installed on the frame (10), part of the side protective beam (13) is opposite to a middle position of the power battery pack (30) in the third direction.

2. The vehicle according to claim 1, further comprising a fuel tank assembly (50), a drive motor, an engine, a motor thermal management system and an engine thermal management system; wherein
the power battery pack (30) is used for providing power to the drive motor, and the engine and the drive motor are connected to the transmission shaft (40) through a switching structure; and
a first pipeline (80) of the engine thermal management system and a second pipeline (90) of the motor thermal management system are arranged to respectively cooperate with the avoidance portion (31), so that the first pipeline (80) and the second pipeline (90) extend in the avoidance portion (31);
wherein the frame (10) comprises a first space (101) and a second space (102), and the engine and the fuel tank assembly (50) are arranged in the second space (102); and
in the first direction, the fuel tank assembly (50) is located at a rear of the first seat (21) or a rear of the second seat (22).

3. The vehicle according to claim 1, wherein a protective plate (14) is arranged at a bottom of the frame (10); and
the protective plate (14) is located on one side of the frame (10) facing a ground, and the protective plate (14) is opposite to the bottom of the power battery pack (30) and used for protecting the bottom of the power battery pack (30).

4. The vehicle according to claim 1, wherein the frame (10) comprises longitudinal beams (15) that extend in the first direction;
a distance between the protective frame (10) and the side girder (11) in the second direction is configured as a first crumple distance L₁; a distance between the side girder (11) and the power battery pack (30) in the second direction is configured as a second crumple distance L₂;
a distance between the protective plate (14) and a top surface of the longitudinal beam (15) in the third direction is configured as a third crumple distance L₃; a distance between the top surface of the longitudinal beam (15) and the bottom of the power battery pack (30) in the third direction is configured as a fourth crumple distance L₄; and
the first crumple distance L₁ is greater than the second crumple distance L₂;
wherein the frame (10) further comprises transverse beams (16) opposite to the avoidance portion (31); and
a longitudinal beam (15) is provided with a transverse beam installation position, the transverse beam (16) is detachably installed to the transverse beam installation position, and the transverse beam (16) is opposite to the avoidance portion (31).

5. The vehicle according to claim 1, wherein the vehicle further comprises a handbrake (60) and a gear shifter (70); and
the handbrake (60) and the gear shifter (70) are arranged between the first seat (21) and the second seat (22), and are located above the power battery pack (30).

6. The vehicle according to claim 1, wherein the vehicle is a hybrid all-terrain vehicle (100), and the vehicle further comprises a fuel tank assembly (50) and a drive motor;
in the first direction, the frame (10) comprises a cab (101) and a power compartment (102), the first seat (21) and the second seat (22) are arranged in the cab (101) at intervals in the second direction, and the fuel tank assembly (50) is arranged in the power compartment (102);
the power battery pack (30) is used for providing power to the drive motor, and the power battery pack (30) is arranged on the frame (10); and
the avoidance portion (31) is located between the first seat (21) and the second seat (22);
wherein the fuel tank assembly (50) is located at any position in a left side, a right side and a middle position of the power battery pack (30) in the second direction;
wherein the all-terrain vehicle further comprises a motor thermal management system, an engine thermal management system and an engine located in the power compartment (102); and
a first pipeline (80) of the engine thermal management system and a second pipeline (90) of the motor thermal management system are arranged to cooperate with the avoidance portion (31), so that the first pipeline (80) and the second pipeline (90) extend in the avoidance portion (31).

7. A power battery pack (30), comprising a first housing (32), a second housing (33) and at least one battery module; wherein
in a third direction, the first housing (32) is arranged above the second housing (33), the first housing (32) and the second housing (33) are connected to form an accommodating cavity, and the battery module is arranged in the accommodating cavity; and
at least part of the second housing (33) is recessed in the third direction toward one side of the first housing (32) and forms an avoidance portion (31), and two ends of the avoidance portion (31) in a first direction extend to a front side and a rear side of the second housing (33) respectively;
wherein the accommodating cavity comprises a first accommodating space and a second accommodating space in a second direction, which are communicated with each other; and
the first accommodating space and the second accommodating space are distributed on both sides of the avoidance portion (31);
wherein the power battery pack (30) comprises a first battery module (130) and a second battery module (140) which are connected in series; and
the first battery module (130) is arranged in the first accommodating space and is located below a first seat (21), and the second battery module (140) is arranged in the second accommodating space and is located below a second seat (22), wherein the first seat (21) and the second seat (22) are arranged at intervals in a second direction; in a third direction, part of the power battery pack (30) is located in a space between the first seat (21) and a frame (10), and rest of the power battery pack (30) is located in a space between the second seat (22) and the frame (10);
wherein the frame (10) further comprises side girders (11), protective frames (12) and side protective beams (13);
in the second direction, a protective frame (12) is located on an outer side of a corresponding side girder (11); in the third direction, the side protective beam (13) is located above the corresponding side girder (11);
the side girders (11), the protective frames (12) and the side protective beams (13) form a protective space for the power battery pack (30), wherein the side protective beams (13) are arranged obliquely in the third direction;
in the second direction, the protective frame (12) and the corresponding side protective beam (13) are arranged on each side of the frame (10), respectively; and
the side protective beam (13) is configured so that when the power battery pack (30) is installed on the frame (10), part of the side protective beam (13) is opposite to a middle position of the power battery pack (30) in the third direction

8. The power battery pack (30) according to claim 7, wherein the first housing (32) is provided with a bulge portion (111) that cooperates with the avoidance portion (31);
the bulge portion (111) is opposite to the avoidance portion (31), and a third space is formed between the bulge portion (111) and the avoidance portion (31); the third space is communicated with the first accommodating space and the second accommodating space respectively;
the power battery pack (30) further comprises a high-voltage control unit (150) that is electrically connected to the battery module; and
the high-voltage control unit (150) is arranged in the third space, and a top surface of the bulge portion (111) is provided with an overhaul window (112) for the high-voltage control unit (150) to be overhauled.

9. The power battery pack (30) according to claim 7 or 8, wherein a cross-section of the avoidance portion (31) in the second direction is n-shaped.

10. The power battery pack (30) according to claim 9, wherein the second housing (33) is provided with a plurality of mounting lugs (120) along its circumference; and
each of the mounting lugs (120) is integrally provided with a mounting hole and a hoisting hole.

11. The power battery pack (30) according to claim 9, wherein the power battery pack (30) further comprises at least one balance valve (160) that is communicated with the accommodating cavity; and
the balance valve (160) is arranged on the second housing (33), and the balance valve (160) is configured to keep pressures inside and outside the accommodating cavity balanced.

12. The power battery pack (30) according to claim 9, wherein the power battery pack (30) further comprises a battery thermal management system; and
the second housing (33) is further provided with a water inlet (172) and a water outlet (171) that are communicated with the accommodating cavity; and the water inlet (172) and the water outlet (171) are respectively connected to a pipeline of the battery thermal management system.

13. The power battery pack (30) according to claim 9, wherein the power battery pack (30) further comprises a first high-voltage output port (181) and a second high-voltage output port (182); and
the first high-voltage output port (181) is configured as a positive electrode output port, the second high-voltage output port (182) is configured as a negative electrode output port, and the first high-voltage output port (181) and the second high-voltage output port (182) cooperate to provide a high-voltage current to an outside.

## Patentansprüche

1. Fahrzeug, das einen Rahmen (10), einen ersten Sitz (21), einen zweiten Sitz (22), einen Leistungsbatteriepaket (30) und eine Antriebswelle (40) umfasst; wobei
der erste Sitz (21) und der zweite Sitz (22) in einer zweiten Richtung in Abständen zueinander angeordnet sind; in einer dritten Richtung sich ein Teil des Leistungsbatteriepakets (30) in einem Raum zwischen dem ersten Sitz (21) und dem Rahmen (10) befindet, und der Rest des Leistungsbatteriepakets (30) sich in einem Raum zwischen dem zweiten Sitz (22) und dem Rahmen (10) befindet; und
ein in der dritten Richtung nach oben vertiefter Ausweichabschnitt (31) an einer Unterseite des Leistungsbatteriepakets (30) angeordnet ist, und sich der Ausweichabschnitt (31) in einer ersten Richtung zu einer Vorderseite und einer Rückseite des Leistungsbatteriepakets (30) erstreckt; der Ausweichabschnitt (31) so ausgelegt ist, dass er mit der Getriebewelle (40) zusammenwirkt; und die Getriebewelle (40) den Ausweichabschnitt (31) durchdringt und sich in der ersten Richtung erstreckt;
**dadurch gekennzeichnet, dass**
der Rahmen (10) ferner Seitentragelemente (11), Schutzrahmen (12) und Seitenschutzträger (13) umfasst;
in der zweiten Richtung sich ein Schutzrahmen (12) an einer Außenseite eines entsprechenden Seitentragelements (11) befindet; in der dritten Richtung sich der Seitenschutzträger (13) oberhalb des entsprechenden Seitentragelements (11) befindet;
die Seitentragelemente (11), die Schutzrahmen (12) und die Seitenschutzträger (13) einen Schutzraum für das Leistungsbatteriepaket (30) bilden, wobei die Seitenschutzträger (13) in der dritten Richtung schräg angeordnet sind;
in der zweiten Richtung der Schutzrahmen (12) und der entsprechende Seitenschutzträger (13) jeweils auf einer Seite des Rahmens (10) angeordnet sind; und
der Seitenschutzträger (13) so ist konfiguriert, dass, wenn das Leistungsbatteriepaket (30) auf dem Rahmen (10) montiert ist, ein Teil des Seitenschutzträgers (13) in der dritten Richtung einer mittleren Position des Leistungsbatteriepakets (30) gegenüberliegt.

2. Fahrzeug nach Anspruch 1, das ferner eine Kraftstofftankanordnung (50), einen Antriebselektromotor, einen Verbrennungsmotor, ein Elektromotor-Wärmemanagementsystem und ein Verbrennungsmotor-Wärmemanagementsystem umfasst; wobei
das Leistungsbatteriepaket (30) zur Stromversorgung des Antriebselektromotors dient und der Verbrennungsmotor sowie der Antriebselektromotor über eine Umschaltstruktur mit der Getriebewelle (40) verbunden sind; und
eine erste Leitung (80) des Elektromotor-Wärmemanagementsystems und eine zweite Leitung (90) des Elektromotor-Wärmemanagementsystems so ausgelegt sind, dass sie jeweils mit dem Ausweichabschnitt (31) zusammenwirken, sodass sich die erste Leitung (80) und die zweite Leitung (90) in den Ausweichabschnitt (31) erstrecken;
wobei der Rahmen (10) einen ersten Raum (101) und einen zweiten Raum (102) umfasst, und der Verbrennungsmotor und die Kraftstofftankanordnung (50) in dem zweiten Raum (102) angeordnet sind; und
sich in der ersten Richtung die Kraftstofftankanordnung (50) hinter dem ersten Sitz (21) oder hinter dem zweiten Sitz (22) befindet.

3. Fahrzeug nach Anspruch 1, wobei eine Schutzplatte (14) an der Unterseite des Rahmens (10) angeordnet ist; und
die Schutzplatte (14) auf einer dem Boden zugewandten Seite des Rahmens (10) angeordnet ist, und die Schutzplatte (14) der Unterseite des Leistungsbatteriepakets (30) gegenüberliegt und zum Schutz der Unterseite des Leistungsbatteriepakets (30) dient.

4. Fahrzeug nach Anspruch 1, wobei der Rahmen (10) Längsträger (15) umfasst, die sich in der ersten Richtung erstrecken;
ein Abstand zwischen dem Schutzrahmen (10) und dem Seitentragelement (11) in der zweiten Richtung als erster Knautschabstand L₁ konfiguriert ist; ein Abstand zwischen dem Seitentragelement (11) und dem Leistungsbatteriepaket (30) in der zweiten Richtung als zweiter Knautschabstand L₂ konfiguriert ist;
ein Abstand zwischen der Schutzplatte (14) und einer Oberseite des Längsträgers (15) in der dritten Richtung als dritter Knautschabstand L₃ konfiguriert ist; ein Abstand zwischen der Oberseite des Längsträgers (15) und der Unterseite des Leistungsbatteriepakets (30) in der dritten Richtung als vierter Knautschabstand L₄ konfiguriert ist; und
der erste Knautschabstand L₁ größer ist als der zweite Knautschabstand L₂;
wobei der Rahmen (10) ferner Querträger (16) gegenüber dem Ausweichabschnitt (31) umfasst; und
ein Längsträger (15) mit einer Querträger-Montageposition versehen ist, der Querträger (16) lösbar an der Querträger-Montageposition angebracht ist und der Querträger (16) dem Ausweichabschnitt (31) gegenüberliegt.

5. Fahrzeug nach Anspruch 1, wobei das Fahrzeug ferner eine Handbremse (60) und einen Schalthebel (70) umfasst; und
die Handbremse (60) und der Schalthebel (70) zwischen dem ersten Sitz (21) und dem zweiten Sitz (22) angeordnet sind und sich über dem Leistungsbatteriepaket (30) befinden.

6. Fahrzeug nach Anspruch 1, wobei das Fahrzeug ein Hybrid-Geländefahrzeug (100) ist und das Fahrzeug ferner eine Kraftstofftankanordnung (50) und einen Antriebselektromotor umfasst;
in der ersten Richtung der Rahmen (10) eine Fahrerkabine (101) und einen Antriebsraum (102) umfasst, der erste Sitz (21) und der zweite Sitz (22) in der Fahrerkabine (101) in Abständen in der zweiten Richtung angeordnet sind, und die Kraftstofftankanordnung (50) im Antriebsraum (102) angeordnet ist;
wobei das Leistungsbatteriepaket (30) zur Stromversorgung des Antriebselektromotors dient, und das Leistungsbatteriepaket (30) am Rahmen (10) angeordnet ist; und
sich der Ausweichabschnitt (31) zwischen dem ersten Sitz (21) und dem zweiten Sitz (22) befindet;
wobei sich die Kraftstofftankanordnung (50) an einer beliebigen Position auf der linken Seite, der rechten Seite oder in der Mitte des Leistungsbatteriepakets (30) in der zweiten Richtung befindet;
wobei das Geländefahrzeug ferner ein Elektromotor-Wärmemanagementsystem, ein Verbrennungsmotor-Wärmemanagementsystem und einen im Antriebsraum (102) angeordneten Verbrennungsmotor umfasst; und
eine erste Leitung (80) des Elektromotor-Wärmemanagementsystems und eine zweite Leitung (90) des Elektromotor-Wärmemanagementsystems so ausgelegt sind, dass sie mit dem Ausweichabschnitt (31) zusammenwirken, sodass sich die erste Leitung (80) und die zweite Leitung (90) in den Ausweichabschnitt (31) erstrecken;

7. Leistungsbatteriepaket (30), welches ein erstes Gehäuse (32), ein zweites Gehäuse (33) und mindestens ein Batteriemodul umfasst; wobei
in einer dritten Richtung das erste Gehäuse (32) über dem zweiten Gehäuse (33) angeordnet ist, das erste Gehäuse (32) und das zweite Gehäuse (33) miteinander verbunden sind, um einen Aufnahmeraum zu bilden, und das Batteriemodul in dem Aufnahmeraum ausgelegt ist; und
mindestens ein Teil des zweiten Gehäuses (33) in der dritten Richtung zu einer Seite des ersten Gehäuses (32) hin zurückgesetzt ist und einen Ausweichabschnitt (31) bildet, und sich zwei Enden des Ausweichabschnitts (31) in einer ersten Richtung jeweils zu einer Vorderseite und einer Rückseite des zweiten Gehäuses (33) erstrecken;
wobei der Aufnahmeraum einen ersten Aufnahmeraum und einen zweiten Aufnahmeraum in einer zweiten Richtung umfasst, die miteinander in Kommunikation stehen; und
der erste Aufnahmeraum und der zweite Aufnahmeraum auf beiden Seiten des Ausweichabschnitts (31) verteilt sind;
wobei das Leistungsbatteriepaket (30) ein erstes Batteriemodul (130) und ein zweites Batteriemodul (140) umfasst, die in Reihe geschaltet sind; und
das erste Batteriemodul (130) im ersten Aufnahmeraum angeordnet ist und sich unterhalb eines ersten Sitzes (21) befindet, und das zweite Batteriemodul (140) im zweiten Aufnahmeraum angeordnet ist und sich unterhalb eines zweiten Sitzes (22) befindet, wobei der erste Sitz (21) und der zweite Sitz (22) in einer zweiten Richtung in Abständen zueinander angeordnet sind; in einer dritten Richtung sich ein Teil des Leistungsbatteriepakets (30) in einem Raum zwischen dem ersten Sitz (21) und einem Rahmen (10) befindet, und der Rest des Leistungsbatteriepakets (30) sich in einem Raum zwischen dem zweiten Sitz (22) und dem Rahmen (10) befindet;
wobei der Rahmen (10) ferner Seitentragelemente (11), Schutzrahmen (12) und Seitenschutzträger (13) umfasst;
in der zweiten Richtung sich ein Schutzrahmen (12) an einer Außenseite eines entsprechenden Seitentragelements (11) befindet; in der dritten Richtung sich der Seitenschutzträger (13) oberhalb des entsprechenden Seitentragelements (11) befindet;
die Seitentragelemente (11), die Schutzrahmen (12) und die Seitenschutzträger (13) einen Schutzraum für das Leistungsbatteriepaket (30) bilden, wobei die Seitenschutzträger (13) in der dritten Richtung schräg angeordnet sind;
in der zweiten Richtung der Schutzrahmen (12) und der entsprechende Seitenschutzträger (13) jeweils auf einer Seite des Rahmens (10) angeordnet sind; und
der Seitenschutzträger (13) so konfiguriert ist, dass, wenn das Leistungsbatteriepaket (30) auf dem Rahmen (10) montiert ist, ein Teil des Seitenschutzträgers (13) in der dritten Richtung einer mittleren Position des Leistungsbatteriepakets (30) gegenüberliegt.

8. Leistungsbatteriepaket (30) nach Anspruch 7, wobei das erste Gehäuse (32) mit einem Ausbuchtungsabschnitt (111) versehen ist, der mit dem Ausweichabschnitt (31) zusammenwirkt;
der Ausbuchtungsabschnitt (111) dem Ausweichabschnitt (31) gegenüberliegt und zwischen dem Ausbuchtungsabschnitt (111) und dem Ausweichabschnitt (31) ein dritter Raum gebildet ist; der dritte Raum jeweils mit dem ersten Aufnahmeraum und dem zweiten Aufnahmeraum in Kommunikation steht;
das Leistungsbatteriepaket (30) ferner eine Hochspannungssteuereinheit (150) umfasst, die elektrisch mit dem Batteriemodul verbunden ist; und
die Hochspannungssteuereinheit (150) in dem dritten Raum angeordnet ist, und eine Oberseite des Ausbuchtungsabschnitts (111) mit einem Wartungsfenster (112) versehen ist, damit die Hochspannungssteuereinheit (150) gewartet werden kann.

9. Leistungsbatteriepaket (30) nach Anspruch 7 oder 8, wobei ein Querschnitt des Ausweichabschnitts (31) in der zweiten Richtung n-förmig ist.

10. Leistungsbatteriepaket (30) nach Anspruch 9, wobei das zweite Gehäuse (33) entlang seines Umfangs mit einer Vielzahl von Befestigungsösen (120) versehen ist; und
jede der Befestigungsösen (120) einstückig mit einem Befestigungsloch und einem Hebeloch versehen ist.

11. Leistungsbatteriepaket (30) nach Anspruch 9, wobei das Leistungsbatteriepaket (30) ferner mindestens ein Ausgleichsventil (160) umfasst, das mit dem Aufnahmeraum in Kommunikation steht; und
das Ausgleichsventil (160) am zweiten Gehäuse (33) angeordnet ist und so konfiguriert ist, dass es den Druck innerhalb und außerhalb des Aufnahmeraums im Gleichgewicht hält.

12. Leistungsbatteriepaket (30) nach Anspruch 9, wobei das Leistungsbatteriepaket (30) ferner ein Batteriewärmemanagementsystem umfasst; und
das zweite Gehäuse (33) ferner mit einem Wassereinlass (172) und einem Wasserauslass (171) versehen ist, die mit dem Aufnahmeraum in Kommunikation stehen; und der Wassereinlass (172) und der Wasserauslass (171) jeweils mit einer Leitung des Batteriewärmemanagementsystems verbunden sind.

13. Leistungsbatteriepaket (30) nach Anspruch 9, wobei das Leistungsbatteriepaket (30) ferner einen ersten Hochspannungs-Ausgangsanschluss (181) und einen zweiten Hochspannungs-Ausgangsanschluss (182) umfasst; und
der erste Hochspannungs-Ausgangsanschluss (181) als Pluspol-Ausgangsanschluss konfiguriert ist, der zweite Hochspannungs-Ausgangsanschluss (182) als Minuspol-Ausgangsanschluss konfiguriert ist, und der erste Hochspannungs-Ausgangsanschluss (181) und der zweite Hochspannungs-Ausgangsanschluss (182) zusammenwirken, um einen Hochspannungsstrom nach außen bereitzustellen.

## Revendications

1. Véhicule, comprenant un châssis (10), un premier siège (21), un deuxième siège (22), un bloc-batterie d'alimentation (30) et un arbre de transmission (40) ; dans lequel
la premier siège (21) et le deuxième siège (22) sont agencés à des intervalles dans une deuxième direction ; dans une troisième direction, une partie du bloc-batterie d'alimentation (30) est située dans un espace entre le premier siège (21) et le châssis (10), et le reste du bloc-batterie d'alimentation (30) est situé dans un espace entre le deuxième siège (22) et le châssis (10) ; et
une portion d'évitement (31) qui est en retrait vers le haut dans la troisième direction est agencée au niveau d'un bas du bloc-batterie d'alimentation (30), et la portion d'évitement (31) s'étend jusqu'à un côté avant et un côté arrière du bloc-batterie d'alimentation (30) dans une première direction ; la portion d'évitement (31) est agencée pour coopérer avec l'arbre de transmission (40) ; et l'arbre de transmission (40) pénètre à travers la portion d'évitement (31) et s'étend dans la première direction ;
**caractérisé en ce que**
le châssis (10) comprend en outre des supports latéraux (11), des châssis de protection (12) et des poutres de protection latérales (13) ;
dans la deuxième direction, un châssis de protection (12) est situé sur un côté externe d'un support latéral (11) correspondant ; dans la troisième direction, la poutre de protection latérale (13) est située au-dessus du support latéral (11) correspondant ;
les supports latéraux (11), les châssis de protection (12) et les poutres de protection latérales (13) forment un espace de protection pour le bloc-batterie d'alimentation (30), dans lequel les poutres de protection latérales (13) sont agencées à l'oblique dans la troisième direction ;
dans la deuxième direction, le châssis de protection (12) et la poutre de protection latérale (13) correspondante sont agencés sur chaque côté du châssis (10), respectivement ; et
la poutre de protection latérale (13) est configurée de sorte que lorsque le bloc-batterie d'alimentation (30) est installé sur le châssis (10), une partie de la poutre de protection latérale (13) est opposée à une position médiane du bloc-batterie d'alimentation (30) dans la troisième direction.

2. Véhicule selon la revendication 1, comprenant en outre un ensemble réservoir de carburant (50), un moteur électrique d'entraînement, un moteur, un système de gestion thermique de moteur électrique et un système de gestion thermique de moteur ; dans lequel
le bloc-batterie d'alimentation (30) est utilisé pour alimenter le moteur électrique d'entraînement, et le moteur et le moteur électrique d'entraînement sont reliés à l'arbre de transmission (40) par l'intermédiaire d'une structure de commutation ; et
une première conduite (80) du système de gestion thermique de moteur et une deuxième conduite (90) du système de gestion thermique de moteur électrique sont agencées pour coopérer respectivement avec la portion d'évitement (31), de sorte que la première conduite (80) et la deuxième conduite (90) s'étendent dans la portion d'évitement (31) ;
dans lequel le châssis (10) comprend un premier espace (101) et un deuxième espace (102), et le moteur et l'ensemble réservoir de carburant (50) sont agencés dans le deuxième espace (102) ; et
dans la première direction, l'ensemble réservoir de carburant (50) est situé au niveau d'un arrière du premier siège (21) ou d'un arrière du deuxième siège (22).

3. Véhicule selon la revendication 1, dans lequel une plaque de protection (14) est agencée au niveau d'un bas du châssis (10) ; et
la plaque de protection (14) est située sur un côté du châssis (10) face à un sol, et la plaque de protection (14) est opposée au bas du bloc-batterie d'alimentation (30) et utilisée pour protéger le bas du bloc-batterie d'alimentation (30).

4. Véhicule selon la revendication 1, dans lequel le châssis (10) comprend des poutres longitudinales (15) qui s'étendent dans la première direction ;
une distance entre le châssis (10) de protection et le support latéral (11) dans la deuxième direction est configurée sous la forme d'une première distance tampon L₁ ; une distance entre le support latéral (11) et le bloc-batterie d'alimentation (30) dans la deuxième direction est configurée sous la forme d'une deuxième distance tampon L₂ ;
une distance entre la plaque de protection (14) et une surface haute de la poutre longitudinale (15) dans la troisième direction est configurée sous la forme d'une troisième distance tampon L₃ ; une distance entre la surface haute de la poutre longitudinale (15) et le bas du bloc-batterie d'alimentation (30) dans la troisième direction est configurée sous la forme d'une quatrième distance tampon L₄ ; et
la première distance tampon L₁ est supérieure à la deuxième distance tampon L₂ ;
dans lequel le châssis (10) comprend en outre des poutres transversales (16) opposées à la portion d'évitement (31) ; et
une poutre longitudinale (15) est munie d'une position d'installation de poutre transversale, la poutre transversale (16) est installée détachable à la position d'installation de poutre transversale, et la poutre transversale (16) est opposée à la portion d'évitement (31).

5. Véhicule selon la revendication 1, dans lequel le véhicule comprend en outre un frein à main (60) et un levier de vitesse (70) ; et
le frein à main (60) et le levier de vitesse (70) sont agencés entre le premier siège (21) et le deuxième siège (22), et sont situés au-dessus du bloc-batterie d'alimentation (30).

6. Véhicule selon la revendication 1, dans lequel le véhicule est un véhicule tout-terrain hybride (100), et le véhicule comprend en outre un ensemble réservoir de carburant (50) et un moteur électrique d'entraînement ;
dans la première direction, le châssis (10) comprend un habitacle (101) et un compartiment de puissance (102), le premier siège (21) et le deuxième siège (22) sont agencés dans l'habitacle (101) à des intervalles dans la deuxième direction, et l'ensemble réservoir de carburant (50) est agencé dans le compartiment de puissance (102) ;
le bloc-batterie d'alimentation (30) est utilisé pour alimenter le moteur électrique d'entraînement, et le bloc-batterie d'alimentation (30) est agencé sur le châssis (10) ; et
la portion d'évitement (31) est située entre le premier siège (21) et le deuxième siège (22) ;
dans lequel l'ensemble réservoir de carburant (50) est situé à toute position dans un côté gauche, un côté droit et une position médiane du bloc-batterie d'alimentation (30) dans la deuxième direction ;
dans lequel le véhicule tout-terrain comprend en outre un système de gestion thermique de moteur électrique, un système de gestion thermique de moteur et un moteur situé dans le compartiment de puissance (102) ; et
une première conduite (80) du système de gestion thermique de moteur et une deuxième conduite (90) du système de gestion thermique de moteur électrique sont agencées pour coopérer avec la portion d'évitement (31), de sorte que la première conduite (80) et la deuxième conduite (90) s'étendent dans la portion d'évitement (31).

7. Bloc-batterie d'alimentation (30), comprenant un premier boîtier (32), un deuxième boîtier (33) et au moins un module de batterie ; dans lequel
dans une troisième direction, le premier boîtier (32) est agencé au-dessus du deuxième boîtier (33), le premier boîtier (32) et le deuxième boîtier (33) sont reliés pour former une cavité de logement, et le module de batterie est agencé dans la cavité de logement ; et
au moins une partie du deuxième boîtier (33) est en retrait dans la troisième direction vers un côté du premier boîtier (32) et forme une portion d'évitement (31), et deux extrémités de la portion d'évitement (31) dans une première direction s'étendent jusqu'à un côté avant et un côté arrière du deuxième boîtier (33) respectivement ;
dans lequel la cavité de logement comprend un premier espace de logement et un deuxième espace de logement dans une deuxième direction, qui sont mis en communication l'un avec l'autre ; et
le premier espace de logement et le deuxième espace de logement sont répartis sur les deux côtés de la portion d'évitement (31) ;
dans lequel le bloc-batterie d'alimentation (30) comprend un premier module de batterie (130) et un deuxième module de batterie (140) qui sont reliés en série ; et
le premier module de batterie (130) est agencé dans le premier espace de logement et est situé sous un premier siège (21), et le deuxième module de batterie (140) est agencé dans le deuxième espace de logement et est situé sous un deuxième siège (22), dans lequel le premier siège (21) et le deuxième siège (22) sont agencés à des intervalles dans une deuxième direction ; dans une troisième direction, une partie du bloc-batterie d'alimentation (30) est située dans un espace entre le premier siège (21) et un châssis (10), et le reste du bloc-batterie d'alimentation (30) est situé dans un espace entre le deuxième siège (22) et le châssis (10) ;
dans lequel le châssis (10) comprend en outre des supports latéraux (11), des châssis de protection (12) et des poutres de protection latérales (13) ;
dans la deuxième direction, un châssis de protection (12) est situé sur un côté externe d'un support latéral (11) correspondant ; dans la troisième direction, la poutre de protection latérale (13) est située au-dessus du support latéral (11) correspondant ;
les supports latéraux (11), les châssis de protection (12) et les poutres de protection latérale (13) forment un espace de protection pour le bloc-batterie d'alimentation (30), dans lequel les poutres de protection latérales (13) sont agencées à l'oblique dans la troisième direction ;
dans la deuxième direction, le châssis de protection (12) la poutre de protection latérale (13) correspondante sont agencés sur chaque côté du châssis (10), respectivement ; et
la poutre de protection latérale (13) est configurée de sorte que lorsque le bloc-batterie d'alimentation (30) est installé sur le châssis (10), une partie de la poutre de protection latérale (13) est opposée à une position médiane du bloc-batterie d'alimentation (30) dans la troisième direction.

8. Bloc-batterie d'alimentation (30) selon la revendication 7, dans lequel le premier boîtier (32) est muni d'une portion renflement (111) qui coopère avec la portion d'évitement (31) ;
la portion renflement (111) est opposée à la portion d'évitement (31), et un troisième espace est formé entre la portion renflement (111) et la portion d'évitement (31) ; le troisième espace est mis en communication avec le premier espace de logement et le deuxième espace de logement respectivement ;
le bloc-batterie d'alimentation (30) comprend en outre une unité de commande haute tension (150) qui est reliée électriquement au module de batterie ; et
l'unité de commande haute tension (150) est agencée dans le troisième espace, et une surface haute de la portion renflement (111) est munie d'une fenêtre de révision (112) pour permettre à l'unité de commande haute tension (150) d'être révisée.

9. Bloc-batterie d'alimentation (30) selon la revendication 7 ou 8, dans lequel une coupe transversale de la portion d'évitement (31) dans la deuxième direction est en forme de n.

10. Bloc-batterie d'alimentation (30) selon la revendication 9, dans lequel le deuxième boîtier (33) est muni d'une pluralité de taquets de montage (120) le long de sa circonférence ; et
chacun des taquets de montage (120) est muni solidairement d'un trou de montage et d'un trou de guindage.

11. Bloc-batterie d'alimentation (30) selon la revendication 9, dans lequel le bloc-batterie d'alimentation (30) comprend en outre au moins une soupape d'équilibrage (160) qui est mise en communication avec la cavité de logement ; et
la soupape d'équilibrage (160) est agencée sur le deuxième boîtier (33), et la soupape d'équilibrage (160) est configurée pour maintenir à l'équilibre des pressions à l'intérieur et à l'extérieur de la cavité de logement.

12. Bloc-batterie d'alimentation (30) selon la revendication 9, dans lequel le bloc-batterie d'alimentation (30) comprend en outre un système de gestion thermique de batterie ; et
le deuxième boîtier (33) est en outre muni d'une entrée d'eau (172) et d'une sortie d'eau (171) qui sont mises en communication avec la cavité de logement ; et l'entrée d'eau (172) et la sortie d'eau (171) sont respectivement reliées à une conduite du système de gestion thermique de batterie.

13. Bloc-batterie d'alimentation (30) selon la revendication 9, dans lequel le bloc-batterie d'alimentation (30) comprend en outre un premier port de sortie haute tension (181) et un deuxième port de sortie haute tension (182) ; et
le premier port de sortie haute tension (181) est configuré sous la forme d'un port de sortie d'électrode positive, le deuxième port de sortie haute tension (182) est configuré sous la forme d'un port de sortie d'électrode négative, et le premier port de sortie haute tension (181) et le deuxième port de sortie haute tension (182) coopèrent pour fournir un courant haute tension à un extérieur.
